(19) Europäisches Patentamt
European Patent Office
Office européen des brevets

(11) **EP 1 280 346 A1**

(12) **EUROPEAN PATENT APPLICATION**
published in accordance with Art. 158(3) EPC

(43) Date of publication:
**29.01.2003 Bulletin 2003/05**

(51) Int Cl.7: **H04N 5/765**, H04N 7/24, H04L 7/00, H04L 12/56, H04L 29/02, H04J 3/00

(21) Application number: **01921865.0**

(22) Date of filing: **18.04.2001**

(86) International application number:
**PCT/JP01/03300**

(87) International publication number:
**WO 01/082603 (01.11.2001 Gazette 2001/44)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **24.04.2000 JP 2000122700**

(71) Applicant: **MATSUSHITA ELECTRIC INDUSTRIAL CO., LTD.**
**Kadoma-shi, Osaka 571-8501 (JP)**

(72) Inventors:
• **KAWABATA, Yohei**
**Takatsuki-shi, Osaka 569-1021 (JP)**
• **KATSUKI, Soichiro**
**Katano-shi, Osaka 576-0021 (JP)**
• **NAKATSUGI, Yasuto**
**Suita-shi, Osaka 565-0851 (JP)**
• **SAEKI, Koso**
**Neyagawa-shi, Osaka 572-0841 (JP)**

(74) Representative: **Lang, Johannes, Dipl.-Ing. et al**
**Bardehle Pagenberg Dost Altenburg Geissler Isenbruck,**
**Postfach 86 06 20**
**81633 München (DE)**

(54) **DATA BROADCASTING SERVICE SYSTEM OF STORAGE TYPE**

(57) In a storage-type data broadcast service system (SDR, SDS) for transmitting a first transport stream (TS) constituting at least one content and containing a plurality of packet data (TSP) having a program clock reference (PCR) as reference clock information when reproducing the content, at a second transfer rate (PCRc) different from a first transfer rate (PCR) which is determined by the reference clock information (PCR), and extracting the plurality of packet data (TSP) composing the content from the transmitted transport stream (TS) to generate and store a second transport stream (TSs), a transmitter (SDS) transmits the plurality of packet data (TSP) composing the content at the second transfer rate (PCRc), and a receiver (SDR) receives the transmitted first transport stream (TS) and detects a transfer rate ratio (N) between the first transfer rate (PCR) and the second transfer rate (PCRc) to generate the second transport stream (TSs) based on the detected transfer rate ratio (N).

F I G. 1

## Description

TECHNICAL FIELD

The present invention relates to a storage-type data broadcast service system for use with digital broadcasting, and more particularly to a storage-type information transmission/reception system such that a digital compressed video/audio data transmitted at a transfer rate different from a standard transfer rate which is set at the time the digital compressed video/audio data is created can be properly recorded and decoded at the receiving end.

BACKGROUND ART

In recent years, storage-type digital broadcast services for broadcast contents utilizing image digital compression encoding techniques have entered into practical phases. In such a storage-type digital broadcast service, a contents supplier such as a broadcast station subjects broadcast contents to digital compression so as to broadcast and distribute video/audio data to users. At the user's end, the digital compressed video/audio data which is broadcast and distributed is temporarily stored in digital storage media (DSM). The digital compressed video/audio data is subsequently read from the storage media, and a device for restoring the digital compressed image is employed to reproduce the contents for viewing.

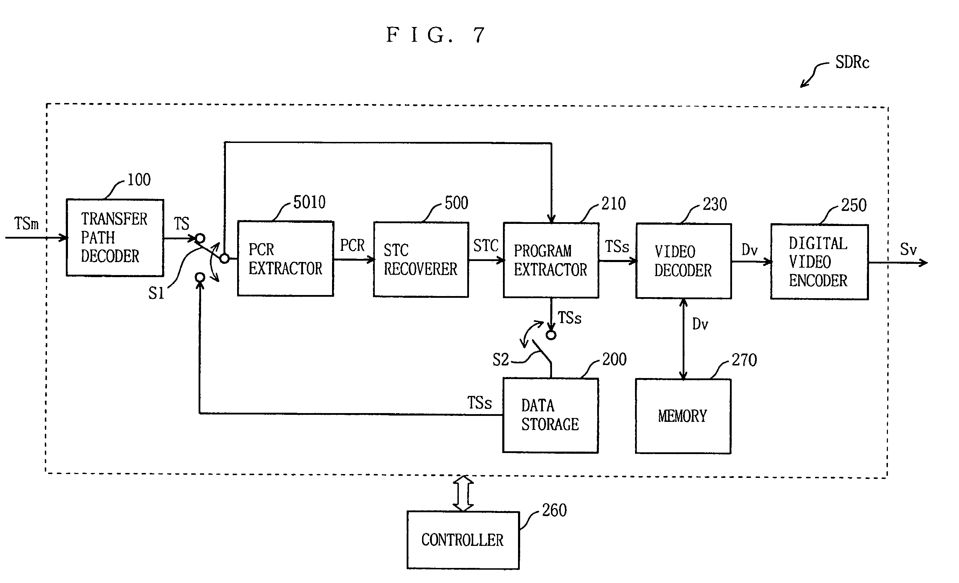

FIG. 7 shows the structure of a hard disk-incorporating digital satellite broadcasting receiver as an example of a storage-type data receiving device which is conventionally used for storage-type data broadcast services. The conventional storage-type data receiving device SDRc includes a transfer path decoder 100, a data storage 200, a program extractor 210, a video decoder 230, a memory 270, a digital video encoder 250, a controller 260, an STC recoverer 500, a PCR extractor 5010, a selector S1, and a selector S2.

The transfer path decoder 100 is coupled to an antenna or the like (not shown) for receiving a digital modulated wave TSm, which is digital compressed video/audio data that is broadcast and distributed from a transmission device such as a broadcast station, e.g., CS or BS, and decodes the received digital modulated wave TSm to demodulate a transport stream TS. The transport stream TS contains a plurality of packet data (hereinafter abbreviated as "packets TSP" when necessary) which compose a plurality of programs.

The selector S1 connects a selected one of the output port of the transfer path decoder 100 or the output port of the data storage 200 to both the input port of the PCR extractor 5010 and the input port of the program extractor 210. The selector S2 connects or disconnects between the output port of the program extractor 210 and the input port of the data storage 200.

The PCR extractor 5010 extracts program clock references (hereinafter abbreviated as "PCR" when necessary) contained in the packets TSP of a particular program selected by the user, from the transport stream TS which is inputted from transfer path decoder 100 via the selector S1. The PCR is clock reference information which is embedded in the packets TSP at predetermined intervals in order to allow a program to be properly reproduced.

Furthermore, the PCR extractor 5010 extracts the PCR from the transport stream TSs which is inputted from the data storage 200 via the selector S1.

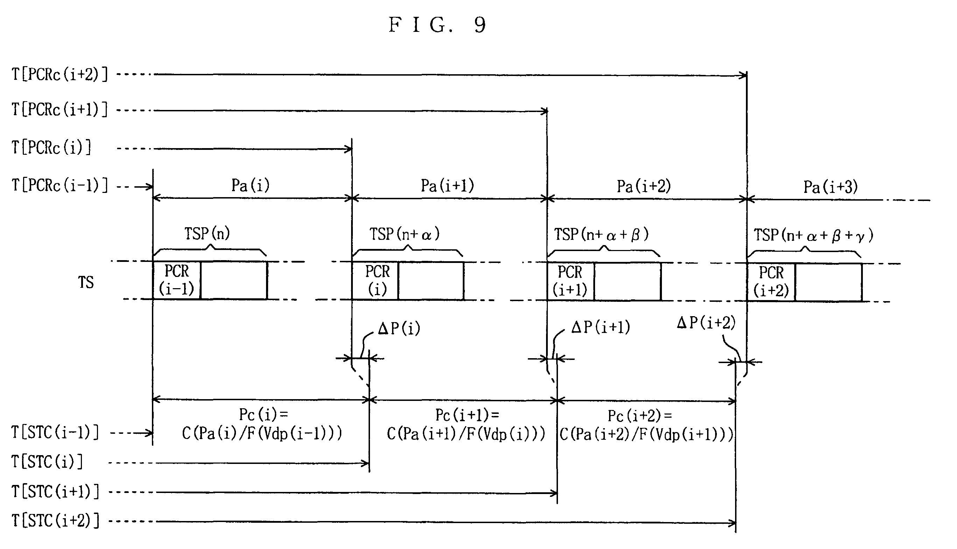

The relationship between transport streams TS, packets TSP, and program clock references PCR will be described later with reference to FIG. 9.

Based on the PCR which is inputted from the PCR extractor 5010, the STC recoverer 500 recovers a system time clock (hereinafter abbreviated as "STC" when necessary). The STC is a reference clock for ensuring that processes for any packets TSP that belong to the same program are synchronized, among all packets TSP contained in the received transport stream TS.

Based on the STC which is inputted from the STC recoverer 500, the program extractor 210 extracts packets TSP corresponding to a desired program from among a plurality of programs or program information which are multiplexed to the transport stream TS, which is inputted from the transfer path decoder 100 via the selector S1, thereby generating a transport stream TSs.

In other words, the transport stream TSs is generated by extracting specific packets TSP from all packets TSP composing the transport stream TS. In this sense, these two kinds of transport streams TS and TSs are referred to as a "primary transport stream TS" and a "secondary transport stream TSs", respectively, so that they can be distinguished from each other. When there is no particular need for distinction, they will simply be referred to as "transport streams TS".

The STC recoverer 500 may be implemented by an STC recovery function complexed within the program extractor 210 through hardware and software means.

The data storage 200 stores the secondary transport stream TSs which is inputted from the program extractor 210 via the selector S2. To this end, the data storage 200 is preferably composed of a mass-volume rewritable recording device such as a hard disk.

The video decoder 230 restores the digital video signal Dv from the secondary transport stream TSs which is inputted from the program extractor 210, and also performs on-screen synthesis as necessary.

The memory 270 operates as a local memory for the video decoder 230. The digital video signal Dv which has been restored by the video decoder 230 is sequentially stored therein and read therefrom.

The digital video encoder 250 encodes the digital video signal Dv which is inputted from the video decoder 230 into a desired video signal Sv (e.g., an NTSC or PAL format) for output.

The controller 260 controls the operation of all of the component elements in the above-described storage-type data receiving device SDRc in accordance with a user instruction.

In the case where the user desires to view a particular program among a plurality of programs provided by the inputted transport stream TS, the selector S1 selects the transfer path decoder 100, and the selector S2 disconnects the program extractor 210 from the data storage 200. Then, the secondary transport stream TSs which has been generated by the program extractor 210 is subjected to the processing by the video decoder 230, the memory 270, and the digital video encoder 250, so that a digital video signal Sv of the program desired by the user is outputted from the storage-type data receiving device SDRc.

In the case where the secondary transport stream TSs of the desired program which has been extracted in the above manner is to be stored, the selector S1 selects the transfer path decoder 100 and the selector S2 connects the data storage 200 to the program extractor 210. Thus, the secondary transport stream TSs which has been generated by the program extractor 210 is stored in the data storage 200.

In the case where the user desires viewing simultaneously with storage, the secondary transport stream TSs is subjected to the processing by the video decoder 230, the memory 270, and the digital video encoder 250, so that a digital video signal Sv of the program desired by the user is outputted from the storage-type data receiving device SDRc. If viewing does not occur simultaneously with storage, the controller 260 causes the operation of the video decoder 230, the memory 270, and the digital video encoder 250 to be stopped.

Furthermore, in the case where the user desires to view the program provided by the secondary transport stream TSs which has been stored in the data storage 200 in the above manner, the selector S1 selects the data storage 200 and the selector S2 disconnects the program extractor 210 from the data storage 200. Then, the secondary transport stream TSs which is read from the data storage 200 is inputted to both the PCR extractor 5010 and the program extractor 210 via the selector S1 for the aforementioned processing, as a result of which a digital video signal Sv of the program extracted by the secondary transport stream TSs is outputted from the storage-type data receiving device SDRc.

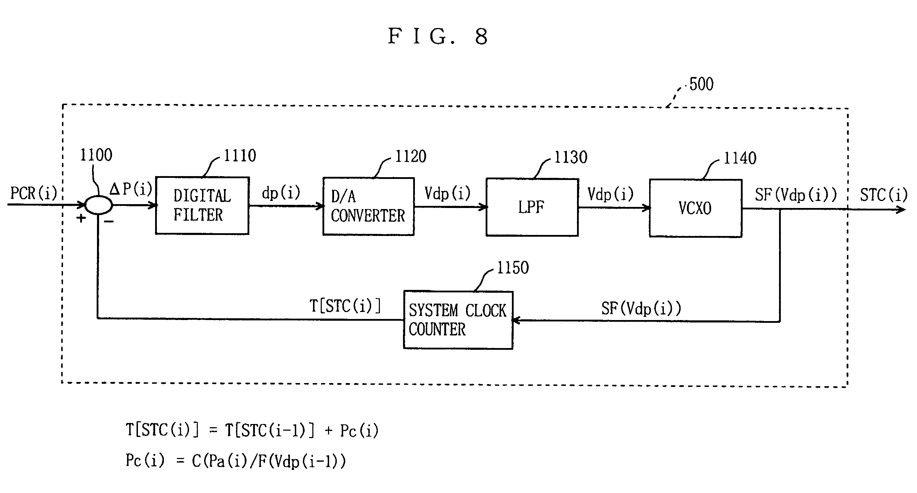

FIG. 8 illustrates the detailed structure of the above-described STC recoverer 500. The STC recoverer 500 includes a comparator 1100, a digital filter 1110, a D/A converter 1120, a low-pass filter 1130, a voltage-controlled crystal oscillator (hereinafter abbreviated as "VCXO") 1140, and a system clock counter 1150.

The comparator 1100 detects a difference between the value of PCR which is inputted from the PCR extractor 5010 and a system clock time T[STC] which is inputted from the system clock counter 1150, and outputs the difference $\Delta P$ to the digital filter 1110.

The digital filter 1110 applies digital filtering to the difference $\Delta P$ inputted from the comparator 1100, thereby generating a control signal dP for $\Delta P$ correction, which is outputted to the D/A converter 1120.

The D/A converter 1120 converts the control signal dP for $\Delta P$ correction inputted from the digital filter 1110 into a voltage VdP, which is outputted to the low-pass filter 1130.

The low-pass filter 1130 removes high-frequency noise components from the voltage VdP inputted from the D/A converter 1120, and outputs it to the VCXO 1140 as a control voltage VdP.

The VCXO 1140 generates a clock signal SF (Vdp) having a frequency F(Vdp) which corresponds to a control voltage VdP inputted from the low-pass filter 1130. The clock signal SF(Vdp) is outputted to the program extractor 210 as STC.

The system clock counter 1150 counts the clock signal SF (Vdp) which is inputted from the VCXO 1140, and outputs the count value as STC. The STC is inputted to the comparator 1100, where a difference $\Delta P$ representing a difference with respect to the inputted PCR is obtained.

With reference to FIG. 9, the relationship between the packets TSP constituting the transport stream TS and the program clock references PCR will be described. A transport stream TS is composed of a plurality of contiguous packets TSP. These packets TSP belong to groups composing respectively different programs.

Among the packets TSP belonging to a group composing the same program, the aforementioned program clock references PCR are contained within predetermined time intervals Pt. As one example, the predetermined time interval Pt is supposed to be 100 ms or less in MPEG2.

In the present example, among the packets TSP belonging to a group composing the same program contained in the transport stream TS, an $n^{th}$ packet TSP(n) contains the time information of an $(i-1)^{th}$ PCR(i-1). Herein, each of n and i is an arbitrary natural number. The value represented by PCR(i-1) (i.e., the time at which a packet indicated by PCR is supposed to arrive at the receiver; it is usually the case that the PCR value = arriving time) is expressed as T[PCR(i-1)] in the figure.

A packet TSP(n+$\alpha$), located at a time interval Pa(i) within 100 ms following a packet TSP(n) containing PCR(i-1), has assigned thereto an $i^{th}$ PCR(i) which represents the time when it is supposed to arrive. In other words, PCR(i) represents a reference time T[PCR(i)], which falls at the time interval Pa(i) after the reference time T[PCR(i-1)]. $\alpha$ is a natural number corresponding to the number of packets TSP arrayed within the time interval Pa(i).

Similarly, a packet TSP(n+$\alpha$+$\beta$), is located at a time interval Pa(i+1) within 100 ms following the packet TSP(n+$\alpha$), has assigned thereto an $(i+1)^{th}$ PCR(i+1) which represents its time . That is, PCR(i+1) represents a reference time T[PCR(i)], which falls at a time interval Pa(i+1) after the reference time T[PCR(i)]. β is a natural number corresponding to the number of packets TSP arrayed within the time interval Pa(i+1).

Similarly still, a packet TSP(n+α+β+γ), located at a time interval Pa (i+2) within 100 ms following the packet TSP (n+ α+β), has assigned thereto an (i+2)th PCR(i+2), which represents its time. In other words, PCR(i+2) represents a reference time T[PCR(i+2)], which falls at a time interval Pa(i+2) after the reference time T[PCR(i+1)]. γ is a natural number corresponding to the number of packets TSP arrayed within the time interval Pa(i+2).

The relationship between program clock references PCR and packets TSP, which has been described above with respect to the four packets TSP(n) to TSP (n+α+β+γ) belonging to a packet group composing one program, is also true to any packets TSP subsequent to the packet TSP(n+α+β+γ), and is similarly true to the packets TSP belonging to a packet group composing any other program.

Next, the operation of the component elements of the recoverer 500 shown in FIG. 8 will be described in detail with reference to the above-mentioned FIG. 9. FIG. 8 illustrates a process at the time when the packet TSP(n+α) has been inputted, i.e., when PCR(i+1) has been extracted. Hereinafter, a case in which the packet TSP(n) is first inputted to the storage-type data receiving device SDRc shown in FIG. 7 before any other packet TSP belonging to a particular program will be described for convenience.

When the packet TSP(n) is inputted to the storage-type data receiving device SDRc, the PCR extractor 5010 extracts PCR(i-1) and inputs it to the comparator 1100. On the other hand, the controller 260 shown in FIG. 7 sets the value of PCR(i-1) as an initial value for the system clock counter 1150. As a result, STC(i-1) having the same value as PCR(i-1) is outputted. The time values of a PCR and a system time clock STC are expressed as a reference time T[PCR] and a system clock time T[STC], respectively, as above.

Since the reference time T[PCR(i-1)] and the system clock time T[STC(i-1)] represent the same time, the clock difference ΔP(i-1) which is outputted from the comparator 1100 is zero. As a result, the control voltage VdP(i-1) which is outputted to the VCXO 1140 after the processing by the digital filter 1110, the D/A converter 1120, and the low-pass filter 1130 is a reference voltage (= center-of-control voltage, hereinafter simply referred to as "zero bolts").

Based on this control voltage VdP(i-1), the VCXO 1140 oscillates a frequency F(Vdp(i-1)) of an initially-set clock value. The initially-set clock of the VCXO 1140 is usually 27 MHz.

Thereafter, from the VCXO 1140, a clock signal SF(Vdp(i-1)) which is oscillated at the initially-set clock of (27 MHz) of the VCXO 1140, is outputted to the system clock counter 1150, and is also outputted to the program extractor 210 as an STC, at the reference time T [PCR(i-1)].

The system clock counter 1150 consecutively counts pulses of the inputted clock signal SF(Vdp(i-1)) in accumulation to the initially-set time of PCR(i-1), and outputs them to the digital filter 1110.

As a result, when PCR(i) is extracted from the inputted packet TSP(n+α), i.e., after the lapse of the time interval Pa(i) from the extraction of PCR(i-1), the system clock time T[STC(i)] is outputted from the system clock counter 1150. The system clock time T[STC (i)] can be derived from the following equations (1) and (2) as a value obtained by adding a calculated time interval Pc(i), which is defined as the number of pulses of the clock signal SF(Vdp(i-1)) counted during the time interval Pa(i), to T[STC(i-1)] :

$$T[STC(i)]=T[STC(i-1)]+Pc(i) \qquad (1)$$

$$Pc(i)=C(Pa(i)/F(Vdp(i-1))) \qquad (2)$$

where C is a coefficient.

However, if the generation frequency F(Vdp) of the VCXO 1140 is not appropriate, the time interval Pa(i), which is an actual time, and the calculated time interval Pc(i), which is a calculated time, do not match. If a clock signal SF(Vdp) having such an inappropriate frequency is used as an STC, inputted packets TSP cannot be properly processed. Therefore, a feedback control as described below is performed in the STC recoverer 500 in order to recover the STC so as to be accurate with respect to the PCR.

FIG. 9 illustrates the case where the generation frequency of the VCXO 1140 is higher than the appropriate value. In other words, since STC(i-1) is set to be PCR(i-1) as soon as PCR(i-1) is extracted, the control voltage control voltage VdP(i-1) to the VCXO 1140 is zero. In this case, the frequency frequency F(Vdp(i-1)) of the outputted clock signal SF(Vdp(i-1)) is the reference generation frequency of the VCXO 1140. In other words, the reference generation frequency of the VCXO 1140 is high relative to the PCR of the transport stream TS inputted to the storage-type data receiving device SDRc. As a result, the count number C(Pa(i)/F(Vdp(i)) counted by the system clock counter 1150 during the time interval Pa(i) is greater than the appropriate value.

As a result, the system clock time T[STC(i)] which is measured during the time interval Pa(i) differs from the reference time T[PCR(i)] by a clock difference ΔP(i). In this example, the system clock time T[STC(i)" is ahead of the reference time T[PCR(i)], which is originally meant to be identical, by the clock difference ΔP(i). Thus, when the STC which is recovered from the PCR and the PCR before recovery are not in synchronization, the storage-type data receiving device SDRc does not operate properly.

In this situation, since the clock difference ΔP(i) which is outputted from the comparator 1100 has a minus value, the control voltage VdP(i) outputted from the low-pass filter 1130 is also equal to or less than the reference voltage (hereinafter simply referred to as being "minus"). Thus, based on the control voltage VdP(i) having a minus value, the generation frequency F(Vdp) of the VCXO 1140 is set to be lower than previously. As a result, a clock signal SF(Vdp(i)) having a lower frequency than that of the previous control voltage VdP(i-1) is outputted from the VCXO 1140.

Next, the count number C(Pa(i+1)/F(Vdp(i+1)) of the clock signal SF(Vdp(i+1)) as measured by the system clock counter 1150 during the time interval Pa(i+1) from when the packet TSP(n+ α+β) is inputted and until PCR(i+1) is extracted is smaller than the previous count number C(Pa(i)/F(Vdp(i)).

As a result, the clock difference ΔP(i+1) between the reference time T[PCR(i+1)] and the system clock time T[STC(i+1)" still has a minus value, although smaller than the previous clock difference ΔP(i).

Therefore, based on the minus control voltage VdP(i+1) having a smaller absolute value than that of the control voltage VdP(i), the VCXO 1140 outputs as STC(i+1) a clock signal SF(Vdp(i+1)) having a frequency F(Vdp) which is smaller than the reference generation frequency but greater than the previous clock signal SF(Vdp(i)).

Next, the count number C(Pa(i+2)/F(Vdp(i+2)) of the clock signal SF(Vdp(i+2)) as measured by the system clock counter 1150 during the time interval Pa(i+2) from when the packet TSP(n+ α+β+γ) is inputted and until PCR(i+2) is extracted is greater than the previous count number count number C(Pa(i+1)/F(Vdp(i+1)), but smaller than the count number count number C(Pa(i-1)/F(Vdp(i-1)) corresponding to the reference frequency of the VCXO 1140.

As a result, the clock difference ΔP(i+2) between the reference time T[PCR(i+2)] and the system clock time T[STC(i+2)" becomes even smaller than the previous clock difference ΔP(i+1), and takes a plus value. In other words, the system clock time T[STC(i+2)" is calculated to be slower than the reference time T[PCR(i+2)] by the clock difference ΔP(i+2). This is a result of the generation frequency of the VCXO 1140 being set so as to be smaller than the appropriate value. In this case, the absolute value of the clock difference ΔP(i+2) is smaller than the absolute value of the clock difference ΔP(i+1) ; thus, dissynchronization between the PCR and the STC is alleviated.

Based on the plus control voltage VdP(i+2) having a smaller absolute value than that of the control voltage VdP(i+1), the VCXO 1140 outputs as STC(i+2) a clock signal SF(Vdp(i+2)) having a frequency frequency F(Vdp(i+2)) which is slightly greater than the reference generation frequency and greater than the previous frequency F(Vdp(i+1)).

Through repetitions of the above-described feedback process, the recovered STC follows along the PCR, and the control voltage VdP of VCXO 1140 properly converges until the reference time T[PCR] and the system clock time T[STC] eventually match, so that an STC which is in synchronization with the PCR is recovered.

Thus, in the storage-type data receiving device SDRc, the PCR which was properly read first is set as the initial value of the system clock counter 1150. As a result, even if PCR cannot be properly extracted from the packet TSP, the aforementioned feedback process is valid with subsequent, properly-extracted PCR. Therefore, the recovery of the STC can be continued.

This is effective also in the case where a once-generated transport stream TS is transmitted or received at a time (date/hour) which is different from a scheduled time of generation or transmission/reception. In other words, although the time which is described by PCR(i) is different from the actual time of transmission/reception regardless of whether i=1, the time interval Pa(i) thereof is correct. Thus, the aforementioned feedback process is valid, so that the STC can be properly recovered. Through comparison with the internal time in the storage-type data receiving device SDRc, the time indicated by PCR(i) can be converted into actual times of transmission/reception for use in various processing.

Next, the operation of the storage-type data receiving device SDRc shown in FIG. 7 will be briefly described. First, the recording of the secondary transport stream TSs in the data storage 200 will be described. The selector S1 cooperating with the controller 260 connects both the PCR extractor 5010 and the program extractor 210 to the transfer path decoder 100. Similarly, the selector S2 connects the program extractor 210 to the data storage 200.

The PCR extractor 5010 extracts PCR from the packets TSP corresponding to the program selected by the program extractor 210 from the transport stream TS inputted from the transfer path decoder 100, and outputs the PCR to the STC recoverer 500. The STC recoverer 500 recovers STC in synchronization with the PCR so as to be outputted to the program extractor 210.

Based on the STC inputted from the STC recoverer 500, the program extractor 210 extracts packets TSP composing the desired program from the transport stream TS inputted from the transfer path decoder 100, and generates the secondary transport stream TSs. The generated secondary transport stream TSs is recorded in the data storage 200.

Next, the case in which the secondary transport stream TSs recorded in the data storage 200 is reproduced will be described. First, the selector S1 cooperating with the controller 260 connects the PCR extractor 5010 and the program extractor 210 to the data storage 200. On the other hand, the selector S2 disconnects the data storage 200 from the program extractor 210.

Next, the secondary transport stream TSs is read from the data storage 200 so as to be inputted to the PCR extractor 5010 and the program extractor 210. As mentioned above, although the PCR(i) recorded in the secondary transport stream TSs is different from the playback time, the time interval Pa(i) is correct, so that the STC can be properly recovered.

Based on the recovered STC, the packets TSP of the program recorded in the secondary transport stream TSs are extracted so as to be outputted to the video decoder 230. In this case, the secondary transport stream TSs which is inputted to the program extractor 210 is identical to the secondary transport stream TSs which is extracted and outputted by the program extractor 210.

Thus, in accordance with the conventional storage-type data receiving device SDRc, the STC can be properly recovered in the case where a once-generated transport stream TS is transmitted or received at a time (date/hour) which is different from a scheduled time of generation or transmission/reception, as well as in the case where the secondary transport stream TSs stored in the data storage 200 is read.

However, in storage-type digital broadcast services of the recent years, in order to optimize the utility of resources concerning transfer paths, it is necessary to send the packets TSP composing each program at the time the transport stream TS was created at a bit stream transfer rate which is different from the original depending on the performance of the transfer paths and the occupancy of usage. Specifically, in a slow or busy transfer path, the transport stream TS is transmitted at a bit stream transfer rate which is lower than the original. In a slow or low-occupiability transfer path, a mass-volume transport stream TS can be transmitted or received for storage with an increased transfer time, albeit the low transfer rate. On the other hand, in the case where a high speed is available or it is possible to occupy the entire transfer path, the transport stream TS can be transmitted at a bit stream transfer rate higher than the original to decrease the usage time of the transfer path.

In such a storage-type digital broadcast service, the bit stream transfer rate at which the transport stream TS is actually transmitted is N times the original bit stream transfer rate of the transport stream TS (where N is an arbitrary number). Hereinafter, the aforementioned N will be referred to as a "transfer rate ratio".

In other words, the calculated time interval Pc(i) constituting the system clock time T[STC(i), which is the output from the system clock counter 1150 as expressed by equation (2) above, can be expressed by the following equation (3) in the storage-type digital broadcast service:

$$Pc(i)=C(Pa(i)/F(Vdp(i-1)))/N \qquad (3)$$

Thus, the system clock counter 1150 outputs. In other words, the calculated time interval Pc(i) is not the original time interval Pa(i), but is a count value of the clock signal SF (Vdp (i)) as counted in 1/N of the time interval Pa(i).

Thus, as described above, the only case in which the system clock time T[STC(i)] measured during the time interval Pa(i) differs from the reference time T [PCR(i)] by the clock difference ΔP(i), i.e., when equation (2) is valid, is when N=1. Therefore, the system time clock STC cannot be properly recovered for any transport stream TS which is transmitted at a bit stream transfer rate other than N=1.

In order to properly recover the system time clock STC even in this situation, it might be possible to re-generate the PCR in accordance with the actual bit stream transfer rate. However, re-generating the PCR is tantamount to re-encoding the existing property transport stream TS itself, which incurs more than negligible cost and time.

Therefore, the present invention aims to provide a storage-type data receiving device which is, without re-encoding a transport stream TS, capable of properly recovering a system time clock STC contained therein even when distributed at a bit stream transfer rate which is different from the original bit stream transfer rate.

DISCLOSURE OF THE INVENTION

To achieve the above objects, the present invention has the following features.

A first aspect of the present invention is a storage-type data broadcast service system for transmitting a first transport stream constituting at least one content and containing a plurality of packet data having a program clock reference as reference clock information when reproducing the content, at a second transfer rate different from a first transfer rate which is determined by the reference clock information, and extracting the plurality of packet data composing the content from the transmitted transport stream to generate and store a second transport stream, comprising:

a transmitter for transmitting the plurality of packet data composing the content at the second transfer rate, and
a receiver for receiving the transmitted first transport stream and detecting a transfer rate ratio between the first transfer rate and the second transfer rate to generate the second transport stream based on the detected transfer rate ratio.

Thus, according to the first aspect, there is no need to re-encode the first transport stream in accordance with the transfer rate.

According to a second aspect of the present invention based on the first aspect, the receiver comprises:

a PCR extractor for extracting the program clock reference contained in the first transport stream,

an STC recoverer for recovering, based on the extracted program clock reference, a system time clock which is a processing reference clock for the packet data,

a PCR correction factor calculator for detecting the transfer rate ratio based on two contiguous said extracted program clock references, and deriving, based on the transfer rate ratio, a correction factor for correcting the extracted program clock reference so as to match the second transfer rate, and

a PCR corrector for correcting the extracted program clock reference based on the correction factor, wherein the STC recoverer is feedback-controlled to recover a system time clock based on the corrected program clock reference.

Thus, according to the second aspect, there is no need to re-encode the first transport stream in accordance with the transfer rate.

According to a third aspect of the present invention based on the first aspect, the receiver comprises:

a PCR extractor for extracting the program clock reference contained in the first transport stream,

an STC recoverer for recovering, based on the extracted program clock reference, a system time clock which is a processing reference clock for the packet data,

an STC/PCR rate ratio calculator for deriving, based on the extracted program clock reference and the recovered system time clock, a correction factor for correcting the extracted program clock reference so as to match the second transfer rate, and

a PCR corrector for correcting the extracted program clock reference based on the correction factor, wherein the STC recoverer is feedback-controlled to recover a system time clock based on the corrected program clock reference.

Thus, according to the third aspect, there is no need to re-encode the first transport stream in accordance with the transfer rate.

According to a fourth aspect of the present invention based on the first aspect, the storage-type data broadcast service system according to claim 1, wherein the receiver comprises:

a PCR extractor for extracting the program clock reference contained in the first transport stream,

a PCRr specifier for causing the PCR extractor to extract as a standard program clock reference the reference clock contained in the first transport stream and contained in packet data transferred at the first transfer rate, and

an STC recoverer for recovering, based on the extracted standard program clock reference, a system time clock which is a processing reference clock for the packet data.

Thus, according to the fourth aspect, there is no need to re-encode the first transport stream in accordance with the transfer rate.

According to a fifth aspect of the present invention based on the first aspect, the transmitter comprises a transfer rate ratio appender for assigning the transfer rate ratio to the first transport stream TS, and

wherein the receiver comprises:

a PCR extractor for extracting the program clock reference contained in the first transport stream,

an STC recoverer for recovering, based on the extracted program clock reference, a system time clock which is a processing reference clock for the packet data,

a PCR correction factor generator for extracting the transfer rate ratio from the first transport stream, and deriving, based on the extracted transfer rate ratio, a correction factor for correcting the extracted program clock reference so as to match the second transfer rate, and

a PCR corrector for correcting the extracted program clock reference based on the correction factor, wherein the STC recoverer is feedback-controlled to recover a system time clock based on the corrected program clock reference.

Thus, according to the fifth aspect, the first transport stream has assigned thereto a transfer rate ratio, so that the system time clock can be properly recovered even if the extraction of the program clock reference fails.

BRIEF DESCRIPTION OF THE DRAWINGS

FIG. 1 is a block diagram schematically illustrating the structure of a storage-type data receiving device according to a first embodiment of the present invention.

FIG. 2 is an explanatory diagram illustrating a relationship between a program clock reference and a system time clock in the storage-type data receiving device shown in FIG. 1.

FIG. 3 is a block diagram schematically illustrating the structure of a transfer rate ratio information appending device for appending a transport stream TS transfer rate ratio information according to the first embodiment of the present invention.

FIG. 4 is a block diagram schematically illustrating the structure of a storage-type data receiving device according to a second embodiment of the present invention.

FIG. 5 is a block diagram schematically illustrating the structure of a storage-type data receiving device according to a third embodiment of the present invention.

FIG. 6 is a block diagram schematically illustrating the structure of a storage-type data receiving device according to a fourth embodiment of the present invention.

FIG. 7 is a block diagram schematically illustrating the structure of a conventional storage-type data receiving device.

FIG. 8 is a block diagram illustrating the detailed structure of an STC recoverer shown in FIG. 7.

FIG. 9 is an explanatory diagram illustrating a relationship between a program clock reference and a system time clock in the storage-type data receiving device shown in FIG. 7.

BEST MODE FOR CARRYING OUT THE INVENTION

The present invention will be described in accordance with the accompanying figures for more detailed description thereof.

(first embodiment)

First, the principal concepts of the storage-type data receiving device according to a first embodiment of the present invention will be described. In the present embodiment, a transfer rate ratio N is embedded in a region which is open to users before transmission, rather than re-encoding a transport stream TS at the transmission end. At the receiving end, the transfer rate ratio N is extracted from the received transport stream TS to allow a system time clock STC to be properly recovered.

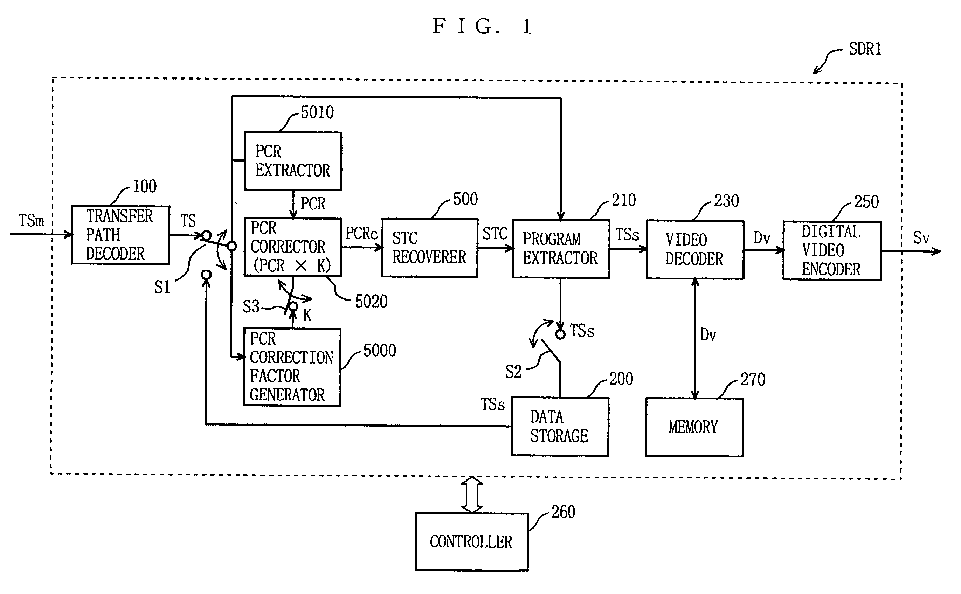

With reference to the block diagram shown in FIG. 1, a hard disk-incorporating digital satellite broadcasting receiver structure is shown as an example of a storage-type data receiving device according to the first embodiment of the present invention. The storage-type data receiving device SDR1 in the present example includes a transfer path decoder 100, a data storage 200, a program extractor 210, a video decoder 230, a memory 270, a digital video encoder 250, a controller 260, an STC recoverer 500, a PCR correction factor generator 5000, a PCR corrector 5020, a PCR extractor 5010, a selector S1, a selector S2, and a selector S3. In other words, the storage-type data receiving device SDR1 has a very similar structure to that of the conventional storage-type data receiving device SDRc shown in FIG. 7. Roughly speaking, the storage-type data receiving device SDR1 is composed of the storage-type data receiving device SDRc with the addition of the PCR correction factor generator 5000, the PCR corrector 5020, and the selector S3. Accordingly, in the present specification, any component elements which are substantially equivalent to those in the already-described storage-type data receiving device SDRc will be denoted by like reference numerals, accompanied with brief descriptions thereof, and the component elements specific to the present invention will be mainly described.

The transfer path decoder 100, which is coupled to an antenna or the like (not shown) for receiving a digital modulated wave TSm of digital compressed video/audio data distributed from a transmission device such as a broadcast station, reproduces the transport stream TS composed of low noise blocks (LNBs), e.g., BS or CS, from the received digital modulated wave TSm. The transport stream TS contains a plurality of packet data TSP composing a plurality of programs.

The selector S1 connects a selected one of the output port of the transfer path decoder 100 or the output port of the data storage 200 to the input port of the PCR correction factor generator 5000, the input port of the PCR extractor 5010, and the input port of the program extractor 210. The selector S2 connects or disconnects between the output port of the program extractor 210 and the input port of the data storage 200. The selector S3 connects or disconnects between the output port of the PCR correction factor generator 5000 and the input port of the arithmetic unit 5020.

From the transport stream TS outputted from the transfer path decoder 100 via the selector S1, or from the secondary transport stream TSs outputted from the data storage 200, the PCR extractor 5010 extracts the PCR contained in the packets TSP of a selected program.

The PCR correction factor generator 5000 extracts a transfer rate ratio N which is embedded in a user area of the transport stream TS to generate a correction factor K for correcting the PCR in accordance with the transfer rate ratio N.

The PCR corrector 5020 corrects the PCR inputted from the PCR extractor 5010 with the correction factor K inputted from the PCR correction factor generator 5000 via the selector S3 to generate corrected program clock references PCRc (hereinafter abbreviated as "PCRc" when necessary), which correspond to the actual transfer rate ratio N, so as to be outputted to the STC recoverer 500.

The STC recoverer 500 recovers the STC based on the PCRc inputted from the PCR extractor 5010.

The program extractor 210 extracts packets TSP corresponding to the desired program from a plurality of programs or program information which are multiplexed to the transport stream TS inputted from the transfer path decoder 100, thereby generating a secondary transport stream TSs.

The data storage 200, which is usually composed of a hard disk or the like, records and stores the secondary transport stream TSs which is inputted from the program extractor 210 via the selector S2.

By utilizing the memory 270 as a local memory, the video decoder 230 restores a digital video signal Dv from the secondary transport stream TSs inputted from the program extractor 210, and also performs on-screen synthesis as necessary.

The digital video encoder 250 encodes the digital video signal Dv which is inputted from the video decoder 230 into a desired video signal Sv (e.g., an NTSC or PAL format) for output.

The controller 260 controls the operation of the other component elements in the above-described storage-type data receiving device SDR1.

In the case where the secondary transport stream TSs of the program which has been extracted in the above manner is to be stored, the selector S1 selects the transfer path decoder 100, the selector S2 connects the data storage 200 to the program extractor 210, and the selector S3 connects the PCR correction factor generator 5000 to the PCR corrector 5020.

As a result, the PCR extractor 5010 extracts PCR from the transport stream TS which is inputted from the transfer path decoder 100 via the selector S1. The PCR correction factor generator 5000 generates the correction factor K from the transport stream TS which is inputted from the transfer path decoder 100 via the selector S1. The PCR corrector 5020 generates PCRc based on the PCR and the correction factor K which are inputted from the PCR extractor 5010 and the PCR correction factor generator 5000, respectively.

The STC recoverer 500 properly recovers the system time clock STC based on the PCRc inputted from the PCR corrector 5020. Based on the system time clock STC inputted from the STC recoverer 500, the program extractor 210 generates the secondary transport stream TSs from the transport stream TS inputted from the transfer path decoder 100 via the selector S1. Then, the data storage 200 stores the secondary transport stream TSs which is inputted from the program extractor 210 via the selector S2.

In the case where the user desires to view the program provided by the secondary transport stream TSs, the secondary transport stream TSs is subjected to processing by the video decoder 230, the memory 270, and the digital video encoder 250, so that a digital video signal Sv of the program desired by the user is outputted from the storage-type data receiving device SDR1. However, if the user does not desire viewing, the controller 260 causes the operation of the video decoder 230, the memory 270, and the digital video encoder 250 to be stopped.

Furthermore, in the case where the user desires to view the program provided by the secondary transport stream TSs which has been stored in the data storage 200 in the above manner, the selector S1 selects the data storage 200, the selector S2 disconnects the program extractor 210 from the data storage 200, and the selector S3 disconnects the PCR correction factor generator 5000 from the PCR corrector 5020.

As a result, the secondary transport stream TSs which is read from the data storage 200 is inputted to each of the PCR correction factor generator 5000, the PCR extractor 5010, and the program extractor 210 via the selector S1. However, the correction factor K generated by the PCR correction factor generator 5000 is not outputted to the PCR corrector 5020. This is because it is unnecessary for the PCR correction factor generator 5000 to generate the correction factor K when reproducing the secondary transport stream TSs stored in the data storage 200.

In other words, the time interval Pa between PCR's in a secondary transport stream TSs generated by the program extractor 210 from a transport stream TS which was transmitted with a transfer rate ratio N unequal to 1 is skewed by an amount corresponding to the transfer rate ratio N; however, the relationship of the time interval Pa between PCR's is properly maintained when the secondary transport stream TSs is recorded in the data storage 200.

Stated otherwise, when a secondary transport stream TSs generated from a transport stream TS which was transmitted with a transfer rate ratio N unequal to 1 is outputted from the program extractor 210, the packets TSP are modified along the time axis so that the time interval Pa between PCR's is skewed by an amount corresponding to the transfer rate ratio N. However, since the data storage 200 records the packets TSP in complete units which are free of any modification along the time axis, the time interval Pa between PCR's becomes identical to that when the transfer rate ratio N is 1.

Hereinafter, the operation of the above-described storage-type data receiving device SDR1 will be described. First, the recording of the secondary transport stream TSs in the data storage 200 will be described. The selector S1 cooperating with the controller 260 connects the PCR correction factor generator 5000, the PCR extractor 5010, and the program extractor 210 to the transfer path decoder 100. Similarly, the selector S2 connects the data storage 200 to the program extractor 210. The PCR correction factor generator 5000 is connected to the PCR corrector 5020 by the selector S3.

The PCR extractor 5010 extracts PCR from the packets TSP corresponding to the program extracted by the program extractor 210 from the transport stream TS inputted from the transfer path decoder 100 via the selector S1, and outputs the PCR to the PCR corrector 5020.

The PCR correction factor generator 5000 extracts the transfer rate ratio N from the transport stream TS inputted from the transfer path decoder 100 via the selector S1, and generates a correction factor K based on the transfer rate ratio N.

In the case where the program of interest is being transmitted at the standard transfer rate, the correction factor K is 1 because N is 1. On the other hand, in slower-than-standard cases, e.g. , where the transfer rate ratio N is 0.5, the correction factor K for the PCR is 2. Yet on the other hand, in faster-than-standard cases, e.g., where transfer rate ratio N is 2, the correction factor K is 0.5. In other words, the time over which the calculated time interval Pc is measured is a fraction divided by the transfer rate ratio N for the time interval Pa, so that the correction factor K for the PCR is equal to a reciprocal of the transfer rate ratio N, as expressed by equation (4) below:

$$K=1/N \qquad (4)$$

The PCR corrector 5020 corrects the PCR inputted from the PCR extractor 5010 with the correction factor K inputted from the STC recoverer 500. Specifically, the value of the PCR is multiplied by K to generate the corrected program clock reference PCRc.

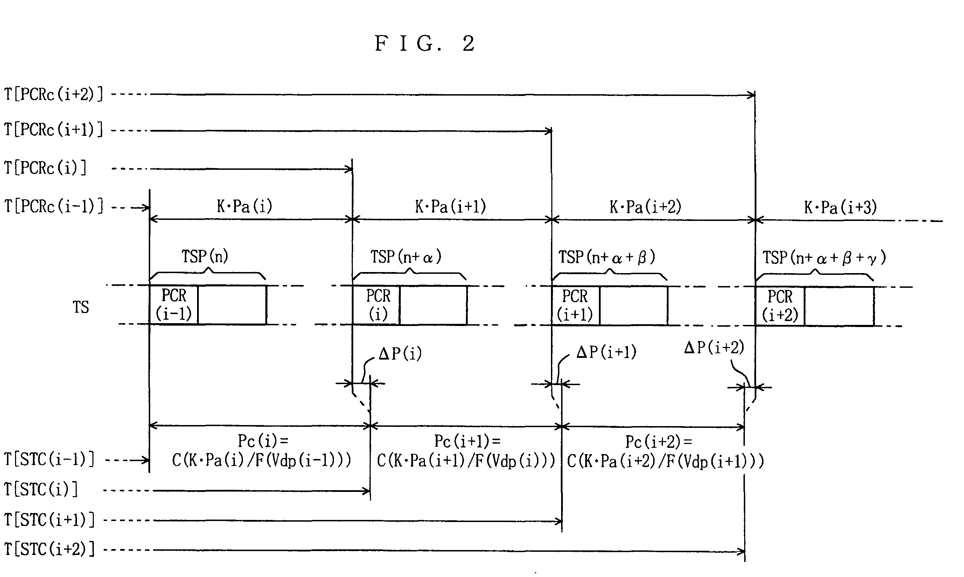

Next, with reference to FIG. 2, the operation of the STC recoverer 500 will be described. The structure of the STC recoverer 500 is as described above with reference to FIG. 7, and the description thereof is omitted. Although FIG. 2 may appear very similar to FIG. 8, there is a difference in that the cases other than the transfer rate ratio N being 1 are supported in FIG. 2 while the cases other than the transfer rate ratio N being 1 are not contemplated in FIG. 2. Hereinafter, the differences will be mainly described.

As already described, an $n^{th}$ packet TSP(n) among all packets TSP belonging to the same program that are contained in the transport stream TS contains time information concerning an $(i-1)^{th}$ PCR(i-1). A packet TSP(n+$\alpha$), located at a time interval Pa(i) within 100 ms following the packet TSP(n) containing PCR(i-1), has an $i^{th}$ PCR(i) assigned thereto which represents its time. PCR(i) is originally supposed to represent a reference time T[PCR(i)], which falls at a time interval Pa(i) after the reference time T[PCR(i-1)]. However, in the case where the transport stream TS is being transmitted or received at the transfer rate ratio N, PCR(i) represents a corrected reference time T[PCRc(i)], which falls at a corrected time interval K·Pa(i), i.e., the time interval Pa(i) multiplied by the correction factor K.

Similarly, a packet TSP(n+$\alpha$+$\beta$) has an $(i+1)^{th}$ PCR(i+1) assigned thereto. PCR(i+1) represents a corrected reference time T[PCRc(i+1)].

Similarly still, a packet TSP(n+$\alpha$+$\beta$+$\gamma$) has an $(i+2)^{th}$ PCR(i+2) assigned thereto. PCR(i+2) represents a corrected reference time T[PCRc(i+2)].

The relationship between program clock references PCR and packets TSP, which has been described above with respect to the four packets TSP(n) to TSP(n+$\alpha$+$\beta$+$\gamma$) belonging to a packet group composing one program, is also true to any packets TSP subsequent to the packet TSP(n+$\alpha$+$\beta$+$\gamma$), and is similarly true to the packets TSP belonging to a packet group composing any other program.

Next, the operation of the component elements of the recoverer 500 shown in FIG. 8 will be described in detail with reference to FIG. 2 above. Hereinafter, a case in which the packet TSP (n) is first inputted to the storage-type data receiving device SDR1 before any other packet TSP belonging to a particular program will be described for convenience. Note that the corrected program clock reference PCRc is inputted to the STC recoverer 500, instead of the program clock reference PCR, according to the present invention.

In other words, when the packet TSP(n) is inputted to the storage-type data receiving device SDR1, following the aforementioned processing, the PCR corrector 5020 generates PCRc(i-1) so as to be inputted to the comparator 1100.

On the other hand, the controller 260 sets the value of PCRc(i-1) as an initial value for the system clock counter 1150. As a result, STC(i-1) having the same value as PCRc(i-1) is outputted. Thus, setting the first-detected PCRc value as an initial value for the system clock counter 1150 and performing feedback control based on a difference with respect to PCRc for each i, any adverse effects of PCR being multiplied by K into PCRc can be eliminated.

Therefore, the clock difference ΔP(i-1) which is outputted from the comparator 1100 is zero. As a result, the control voltage VdP(i-1) which is outputted to the VCXO 1140 after being subjected to the processing by the digital filter 1110, the D/A converter 1120, and the low-pass filter 1130 is zero bolts.

Thereafter, from the VCXO 1140, a clock signal SF(Vdp(i-1)) which is oscillated at the initially-set clock of (27 MHz) of the VCXO 1140, is outputted to the system clock counter 1150, and is also outputted to the program extractor 210 as an STC, at the corrected reference time T[PCRc(i-1)].

The system clock counter 1150 consecutively counts pulses of the inputted clock signal SF(Vdp(i-1)) and accumulates the count values to the initially-set time of PCR(i-1), and consecutively generates a system clock time T[STC], which is the time represented by STC, for being outputted to the digital filter 1110.

As a result, when PCR(i) is extracted from the inputted packet TSP(n+$\alpha$), i.e., after the lapse of the corrected time interval K·Pa(i) from the extraction of PCR(i-1) , the system clock time T[STC(i)] is outputted from the system clock counter 1150. The system clock time T[STC(i)] can be the following equation (5), as a sum of T[STC(i-1)] and a calculated time interval Pc(i), which is defined as the number of pulses of the clock signal SF (Vdp (i-1)) counted during the corrected time interval K·Pa(i) :

$$Pc(i)=C(K·Pa(i)/F(Vdp(i-1))) \qquad (5)$$

FIG. 2 illustrates the case where the generation frequency of the VCXO 1140 is higher than the appropriate value. In other words, since STC(i-1) is set to be PCRc(i-1) as soon as PCRc(i-1) is extracted, the control voltage VdP(i-1) for the VCXO 1140 is zero. In this case, the frequency clock signal F(Vdp(i-1)) of the outputted clock signal SF(Vdp(i-1)) is the reference generation frequency (e.g., 27 MHz) of the VCXO 1140. The reference generation frequency of the VCXO 1140 is high relative to the PCR of the transport stream TS inputted to the storage-type data receiving device SDR1. As a result, the count number C(K·Pa(i)/F(Vdp(i))) counted by the system clock counter 1150 during the corrected time interval K·Pa(i) is greater than the appropriate value.

In other words, the system clock time T[STC (i)] which is measured during the corrected time interval K·Pa(i) differs from the corrected reference time T[PCR (i)] by a clock difference ∆P(i). In this example, the system clock time T[STC(i)]" is ahead of the corrected reference time T[PCR(i)], which is originally meant to be identical, by the clock difference ∆P(i). Thus, when the STC which is recovered from the PCR (PCRc) and the PCR (PCRc) before recovery are not in synchronization, the storage-type data receiving device SDRc does not properly operate.

In this situation, since the clock difference ∆P (i) which is outputted from the comparator 1100 has a minus value, the control voltage VdP (i) outputted from the low-pass filter 1130 also has a minus value. Thus, based on the control voltage VdP (i) having a minus value, the generation frequency of the VCXO 1140 is set to be lower than previously. As a result, a clock signal SF(Vdp(i)) having a lower frequency frequency F(Vdp (i)) than the frequency F(Vdp(i-1)) corresponding to the previous, i.e., the control voltage VdP(i-1), is outputted from the VCXO 1140.

Next, the count number C(K·Pa(i+1)/F(Vdp (i+1)) of the clock signal SF(Vdp(i+1)) as measured by the system clock counter 1150 during the corrected time interval K·Pa(i) from when the packet TSP(n+α+β) is inputted and until PCR(i+1) is extracted is smaller than the previous count number C(K·Pa/F(Vdp(i)).

As a result, the clock difference ∆P(i+1) between the corrected reference time T[PCRc(i+1)] and the system clock time T[STC(i+1)]" still has a minus value, although smaller than the previous clock difference ∆P(i).

Therefore, based on the minus control voltage VdP(i+1) having a smaller absolute value than that of the control voltage VdP(i), the VCXO 1140 outputs as STC(i+1) a clock signal SF(Vdp(i+1)) having a frequency F(Vdp+1) which is smaller than the reference generation frequency (27 MHz) but greater than the previous frequency F(Vdp(i)).

Next, the count number C(K·Pa(i+2)/F(Vdp (i+2)) of the clock signal SF(Vdp(i+2)) as measured by the system clock counter 1150 during the corrected time interval K·Pa(i+2) from when the packet TSP(n+α+β+γ) is inputted and until PCR(i+2) is extracted is smaller than the previous count number C(K Pa(i+1)/F(Vdp (i+1)).

As a result, the clock difference ∆P(i+2) between the corrected reference time T[PCRc(i+2)] and the system clock time T[STC(i+2)]" becomes even smaller than the previous clock difference ∆P(i+1), and takes a plus value. In other words, the system clock time T[STC(i+2)]" is calculated to be slower than the corrected reference time T[PCRc(i+2)] by the clock difference ∆ P(i+2). This is a result of the generation frequency of the VCXO 1140 being set so as to be smaller than the appropriate value. Note that, in this case, the absolute value of the clock difference ∆P(i+2) is smaller than the absolute value of the clock difference ∆P(i+1) ; thus, dissynchronization between the PCRc and the STC is alleviated.

Based on the plus control voltage VdP(i+2) having a smaller absolute value than that of the control voltage VdP(i+1), the CXO 1140 outputs as STC(i+2) a clock signal SF(Vdp(i+2)) having a frequency F(Vdp (i+2)) which is slightly greater than the reference generation frequency and greater than that of the previous clock signal SF(Vdp(i+1)).

Through repetitions of the above-described feedback process, the recovered STC follows along the corrected program clock reference PCRc (i.e., the program clock reference PCR) , and the control voltage VdP of VCXO 1140 properly converges until the corrected reference time T[PCRc] and the system clock time T [STC] eventually match. In other words, the reference time T[PCR] and the system clock time T[STC] match, so that an STC which is in synchronization with the PCR is recovered.

Thus, in the storage-type data receiving device SDR1 according to the present invention, by correcting PCR(i) based on the transfer rate ratio N of the transport stream TS, the system time clock STC can be properly recovered based on the original PCR even in cases other than the transfer rate ratio N being 1. Moreover, by setting PCRc(i) which is generated from the PCR(i) which was properly read first as the initial value of the system clock counter 1150, even if PCR cannot be properly extracted from the packet TSP, the aforementioned feedback process is valid with subsequent, properly-extracted PCR. Therefore, the recovery of the STC can be continued.

This is effective also in the case where a once-generated transport stream TS is transmitted or received at a time (date/hour) which is different from a scheduled time of generation or transmission/reception. In other words, although the time represented by PCR (i) and PCRc(i) is different from the actual time of transmission/reception regardless of whether i=1, the corrected time interval corrected time interval K·Pa(i) thereof is correct. Thus, the aforementioned feedback process is valid, so that the STC can be properly recovered. Through comparison with the internal time in the storage-type data receiving device SDRc, the time indicated by PCR(i) and PCRc(i) can be converted into actual times of transmission/reception for use in various processing.

Based on the STC inputted from the STC recoverer 500, the program extractor 210 extracts packets TSP composing the desired program from the transport stream TS inputted from the transfer path decoder 100, and generates the secondary transport stream TSs. The generated secondary transport stream TSs is recorded in the data storage 200.

Next, the case in which the secondary transport stream TSs recorded in the data storage 200 is reproduced will be described. First, the selector S1 cooperating with the controller 260 connects the PCR correction factor generator 5000, the PCR extractor 5010 and the program extractor 210 to the data storage 200. On the other hand, the selector S2 disconnects the data storage 200 from the program extractor 210. Furthermore, the selector S3 disconnects the PCR corrector 5020 from the PCR correction factor generator 5000.

Next, the secondary transport stream TSs is read from the data storage 200 so as to be inputted to the PCR correction factor generator 5000, the PCR extractor 5010 and the program extractor 210. Since the PCR correction factor generator 5000 is disconnected from the PCR corrector 5020 by the selector S3, the correction factor K generated by the PCR correction factor generator 5000 is not inputted to the PCR corrector 5020.

As mentioned above, although the PCR(i) recorded in the secondary transport stream TSs is different from the recovered time, the time interval Pa(i) is correct, so that the STC can be properly recovered. Based on the recovered STC, the packets TSP of the program recorded in the secondary transport stream TSs are extracted so as to be outputted to the video decoder 230. In this case, the secondary transport stream TSs which is inputted to the program extractor 210 is identical to the secondary transport stream TSs which is extracted and outputted by the program extractor 210.

Thus, in accordance with the storage-type data receiving device SDR1, the STC can be properly recovered, in the case where a once-generated transport stream TS is transmitted or received at a time (date/hour) which is different from a scheduled time of generation or transmission/reception, or from the secondary transport stream TSs which is once recorded and stored.

As described above, according to the present embodiment, STC recovery can be normally performed even when receiving a program which has been transferred at a non-standard transfer rate (i.e., the transfer rate ratio N not being 1). When reproducing the program from the data storage 200, program reproduction can be normally performed by using the PCR information appended in the stream of the program as it is.

If the extraction of the program clock reference PCR fails due to problems related to the transfer path and the like, it would conventionally be impossible to recover the system time clock STC even when the transfer rate ratio N is 1 because of absence of a feedback process between two contiguous PCR's. Even in such cases, according to the present embodiment, it is possible to perform a feedback process between a recently-extracted PCR and a currently-extracted PCR, based on the transfer rate ratio N which is assigned to the transport stream TS.

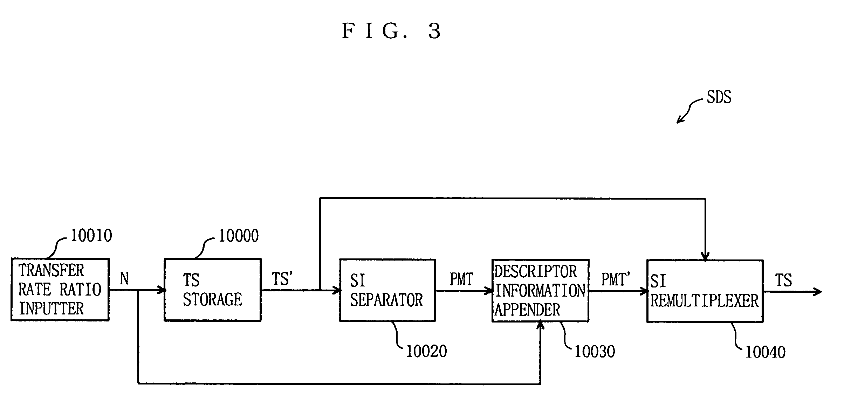

Next, with reference to FIG. 3, a transfer rate ratio appender SDS for embedding a transfer rate ratio N in a transport stream TS for use at the transmitter end will be described.

The transfer rate ratio appender SDS includes a transport stream storage (hereinafter abbreviated as the "TS storage") 1000, a transfer rate ratio inputter 10010, a service information separator (hereinafter abbreviated as the "Si separator") 10020, a descriptor information appender 10030, and a difference service information remultiplexer (hereinafter abbreviated as the "Si remultiplexer")10040.

The TS storage 10000, which is composed of a hard disk or the like, stores the transport stream TS prior to transmission. The transfer rate ratio inputter 10010 inputs a transfer rate ratio N used when the transmission end actually transmits the transport stream TS.

The transfer rate ratio inputter 10010 inputs the transfer rate ratio N as instructed at the transmission end to the TS storage 10000 and the descriptor information appender 10030. The TS storage 10000 outputs the stored transport stream TS to the Si separator 10020 and the Si remultiplexer 10040 at the transfer rate ratio N as instructed.

The Si separator 10020 extracts region data which is open to users, e.g., a PMT (Program Map Table) or an EIT (Event Information Table), which are among the service information Si of the inputted transport stream TS'. The present specification illustrates the case where PMT is the region data . In other words , the Si separator 10020 extracts PMT from the transport stream TS and outputs it to the descriptor information appender 10030.

To the PMT inputted from the Si separator 10020, the descriptor information appender 10030 writes the transfer rate ratio N inputted from the transfer rate ratio inputter 10010, thereby generating PMT' for being outputted to the Si remultiplexer 10040.

The Si remultiplexer 10040 multiplexes the PMT' inputted from the descriptor information appender 10030 to the transport stream TS' inputted from the TS storage 10000, thereby generating the transport stream TS. As described above, the transport stream TS' is identical to the transport stream TS except that the transfer rate ratio N is assigned to PMT.

(second embodiment)

First, the principal concepts of the storage-type data receiving device according to a second embodiment of the present invention will be described. In the present embodiment, rather than embedding a transfer rate ratio N in a transport stream TS for transmission at the transmission end, a transfer rate ratio N of packets TSP of a program which is stored is calculated at the receiving end, and a program clock reference PCR is corrected based on the calculated value to allow a system time clock STC to be properly recovered.

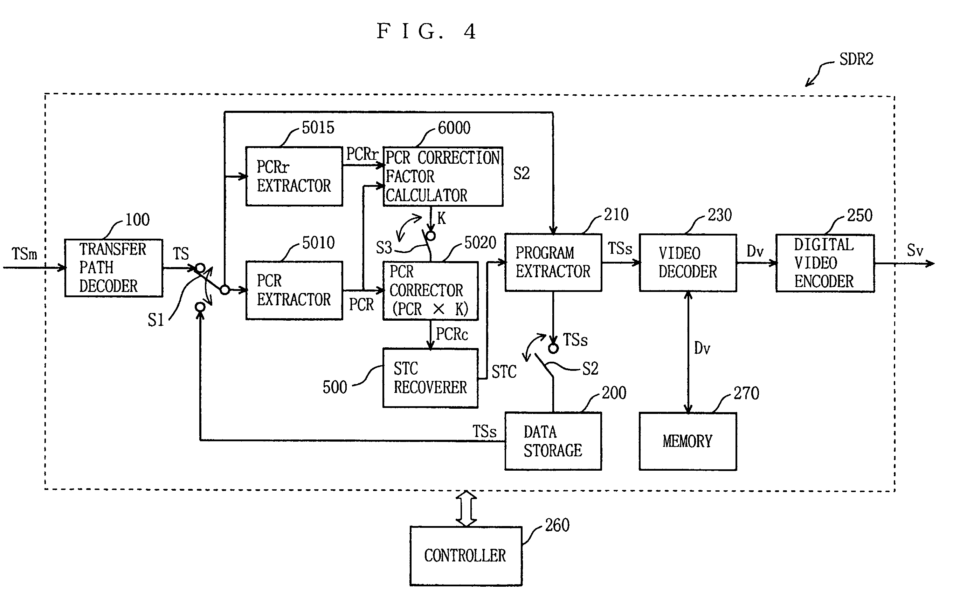

With reference to FIG. 4, the storage-type data receiving device according to the present embodiment will be described. The storage-type data receiving device SDR2 is composed of the storage-type data receiving device SDR1 shown in FIG. 1 with the addition of a PCRr extractor 5015 and a PCR correction factor calculator 6000, from which the PCR correction factor generator 5000 is eliminated.

The PCRr extractor 5015, which is constructed similarly to the above-described PCR extractor 5010, extracts PCR from a different source. Specifically, the PCR extractor 5010 extracts PCR from the packets TSP of a program which is selected by a user for storage. However, in a program which is not selected by a user for storage, the PCRr extractor 5015 extracts PCR from packets TSP associated with a standard transfer rate (i. e., the transfer rate ratio N being 1). The PCR extracted by the PCRr extractor 5015, which represents reference times of transmission/reception for a standard transfer rate, will be referred to as a standard program clock reference PCRr (hereinafter abbreviated as "PCRr" when necessary) , as opposed to the program clock reference PCR extracted by the PCR extractor 5010.

The PCR correction factor calculator 6000 calculates a transfer rate ratio N for the packets TSP of the program for storage based on the PCR inputted from the PCR extractor 5010 and the PCRr inputted from the PCRr extractor 5015, and generates a correction factor K based on the calculated transfer rate ratio N. Thus, the PCR correction factor calculator 6000 is the same as the above-described PCR correction factor generator 5000 in terms of extraction of the correction factor K.

However, there is a significant difference in that, while the PCR correction factor generator 5000 reads the transfer rate ratio N embedded in the packets TSP of the program for storage, the PCR correction factor calculator 6000 calculates a transfer rate ratio N based on the PCR of the selected program and the PCRr of the non-selected, standard transfer rate program contained in the transport stream TS. Otherwise, the storage-type data receiving device SDR2 is identical to the above-described storage-type data receiving device SDR1 in structure and operation. Therefore, only the operation of the PCR correction factor calculator 6000 will be described.

Hereinafter, with reference to FIG. 2 and FIG. 9, the operation of the PCR correction factor calculator 6000 will be described. The relationship which has been described with reference to FIG. 9 exists between the standard program clock reference PCRr outputted from the PCRr extractor 5015 and the recovered system time clock STC. In other words, as expressed by equation (2) above, calculated time interval Pc(i)=C(Pa(i)/F(Vdp(i-1))).

On the other hand, the relationship which has been described with reference to FIG. 2 exists between the program clock reference PCR outputted from the PCR extractor 5010 and the recovered system time clock STC. In other words, as expressed by equation (5) above, calculated time interval $Pc(i)=C(K \cdot Pa(i))/F(Vdp(i-1))$.

As seen from the above, the correction factor K can be derived by dividing the calculated time interval Pc(i) of the standard program clock references PCRr by the calculated time interval Pc(i) of the program clock references PCR.

Specifically, the PCR correction factor calculator 6000 first derives PCRr(i)-PCRr(i-1), i.e., the calculated time interval Prc(i) of the standard program clock references PCRr inputted from the PCRr extractor 5015. Next, the PCR correction factor calculator 6000 derives PCR(i)-PCR(i-1), i.e., the calculated time interval Prc(i) of the program clock reference PCR inputted from the PCR extractor 5010. Then, the PCR correction factor calculator 6000 calculates the correction factor K in accordance with equation (6) below:

$$K = [(PCRr(i)-PCRr(i-1))/Prc(i)] / [(PCR(i)-PCR(i-1))/Pc(i)] \qquad (6)$$

As described above, according to the present embodiment, there is no need to previously assign the transfer rate ratio N to the transport stream TS even in the case of making transfers at no-standard transfer rates (i.e., the transfer rate ratio N not being 1).

The transfer rate ratio N according to the present embodiment, which is preferably an integer value, does not need to be an integer value. In other words, the transfer rate ratio N may be any of a plurality of values which are different from one another by a predetermined amount. Hereinafter, the predetermined amount will be described.

Assuming that clocks for program clock references PCR at the transmission end and clocks for the system time clock STC at the receiving end have respective frequencies of f_PCR and f_STC, and defining a frequency ratio R = f_PCR/f_STC, with a maximum value Kmax of the correction factor K(1/N), then, in order to determine the correction factor K at the receiver, the severest condition would exist when the correction factor K = Kmax. Defining 1/M thereof as a minimum predetermined value (referred to as the "predetermined interval width"), it is necessary that 1/Kmax×1/M >> R is met.

As a specific example, assuming Kmax=100, and also assuming R=500ppm in view of the performance of current crystal oscillators and the like, it follows that 1/(100×M)=500ppm and therefore M=1/5000ppm=20. In other words, the predetermined interval width 1/M=1/20=0.05.

(third embodiment)

First, the principal concepts of the storage-type data receiving device according to a third embodiment of the present invention will be described. In the present embodiment, rather than embedding for transmission a transfer rate ratio N in the transport stream TS at the transmission end, a transfer rate ratio N of packets TSP of a selected program is calculated at the receiving end, as in the above-described second embodiment. However, in the present embodiment, a transfer rate ratio N is calculated through comparison of PCR and STC, and a program clock reference PCR is corrected based on the calculated value so as to allow the system time clock STC to be properly recovered.

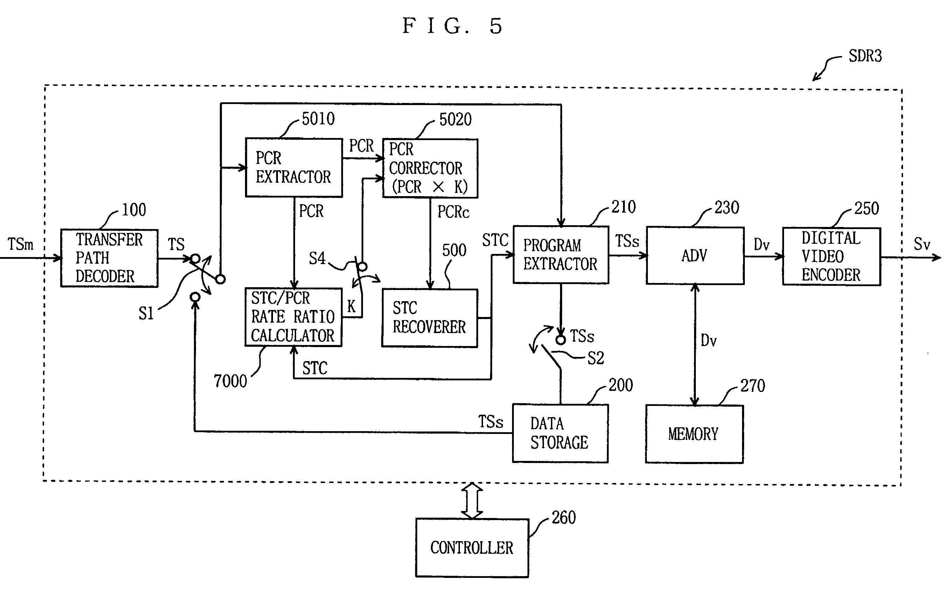

With reference to FIG. 5, the storage-type data receiving device according to the present embodiment will be described. The storage-type data receiving device SDR3 is composed of the storage-type data receiving device SDR2 shown in FIG. 4 with the addition of a selector S4 and an STC/PCR rate ratio calculator 7000, from which the selector S3, the PCRr extractor 5015, and the PCR correction factor calculator 6000 are eliminated.

The selector S4 is controlled by the controller 260 to connect or disconnect between the output port of the STC/PCR rate ratio calculator 7000 and the input port of the PCR corrector 5020. Since the selector S3 is eliminated, the PCR corrector 5020 is always connected to the STC recoverer 500.

The STC/PCR rate ratio calculator 7000 calculates a ratio R between the PCR values extracted from the packets TSP of the selected program and the STC values recovered within the storage-type data receiving device SDR3 based on a program clock reference PCR inputted from the PCR extractor 5010 and a system time clock STC inputted from the STC recoverer 500, and generates a correction factor K based on the calculated ratio R.

The PCR corrector 5020 corrects the program clock reference PCR inputted from the PCR extractor 5010 with the correction factor K inputted from the STC/PCR rate ratio calculator 7000 via the selector S4, thereby generating a corrected program clock reference PCRc for being outputted to the STC recoverer 500.

Except for the calculation of the PCR/STC ratio R, the storage-type data receiving device SDR3 is identical to the above-described storage-type data receiving device SDR1 and storage-type data receiving device SDR2 in structure and operation. Therefore, only the operation STC/PCR rate ratio calculator 7000 will be described below.

Hereinafter, the operation of the STC/PCR rate ratio calculator 7000 will be described with reference to FIG. 2. The relationship which has been described with reference to FIG. 2 exists between the PCR outputted from the PCR extractor 5010 and the system time clock STC outputted from the STC recoverer 500. In other words, the calculated time interval Pc(i) (which corresponds to the system clock time T[STC]) = C(K · Pa(i)) /F(Vdp(i-1)). Accordingly, the correction factor K can be derived by dividing the calculated time interval Pc(i) with the time interval Pa(i) (which corresponds to the reference time T[PCR] shown in FIG. 9).

In other words, in accordance with equation (7),

$$K = STC(i)/PCR(i) \qquad (7)$$

As described above, according to the present embodiment, a correction factor K can be derived in response to each input of PCR based on the ratio between STC and PCR. As a result, unlike in the above-described first embodiment, there is no need to assign a transfer rate ratio N of a program having a non-standard transfer rate to the transport stream TS at the transmission end. Furthermore, unlike in the above-described first and second embodiments, a system time clock STC can be recovered without relying on a difference between two or more contiguous PCR's. As a result, the transfer rate of a program having a non-standard transfer rate can be made variable on the basis of PCR insertion intervals in the transport stream TS.

(fourth embodiment)

First, the principal concepts of the storage-type data receiving device according to a fourth embodiment of the present invention will be described. The present embodiment is unlike the above-described first, second, and third embodiments, in that a transfer rate ratio N is not embedded for transmission in the transport stream TS at the transmission end, and that a transfer rate ratio N of packets TSP of a selected program is not calculated at the receiving end. Specifically, a system time clock STC is recovered based on a program clock reference PCR of a program which is transmitted or received in a transport stream TS at a standard transfer rate, and the packets TSP of a program selected for storage are processed using the recovered system time clock STC.

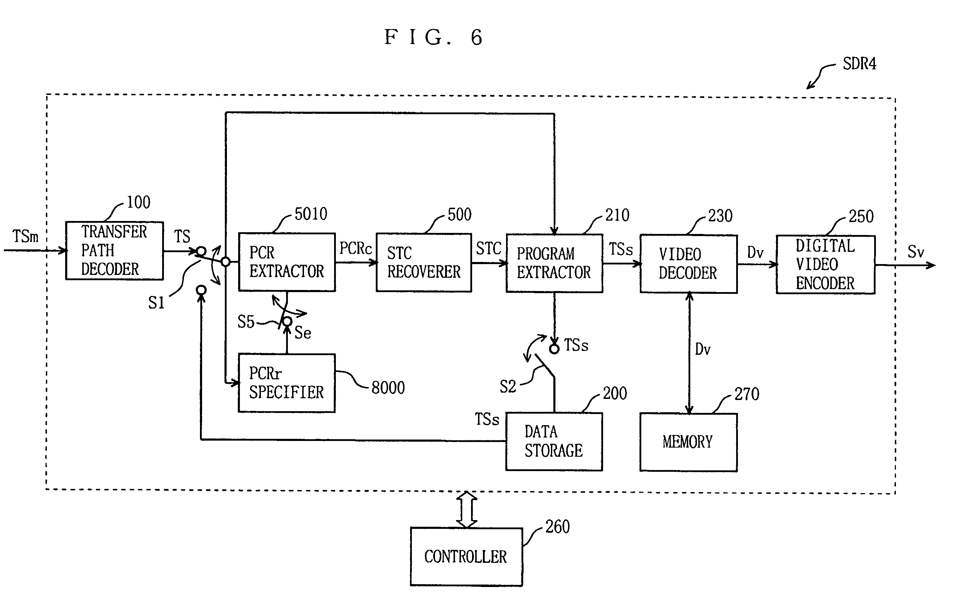

With reference to FIG. 6, the storage-type data receiving device according to the present embodiment will be described. The storage-type data receiving device SDR4 is composed of the storage-type data receiving device SDR1 shown in FIG. 1 with the addition of a selector S5 and a PCRr specifier 8000, from which the selector S3, the STC recoverer 500, and the PCR corrector 5020 are eliminated.

As a result, the PCR extractor 5010 is always connected to the STC recoverer 500. The selector S5 connects or disconnects between the output port of the PCR correction factor generator 5000 and the input port of the PCR extractor 5010.

Except for the detection of a standard program clock reference PCRr, the storage-type data receiving device SDR4 is identical to the above-described storage-type data receiving device SDR1 in structure and operation. Therefore, only the operation of the PCRr specifier 8000 and the PCR extractor 5010 will be briefly described below.

When a user selects a program to store, the controller 260 generates a PCRr extraction instructing signal Se for the PCR (i.e., PCRr) of another program in the transport stream TS that is transmitted or received at a standard transfer rate (i.e., the transfer rate ratio N being 1).

Based on the PCRr extraction instructing signal Se inputted from the PCRr specifier 8000 via the selector S5, the PCR extractor 5010 extracts the PCR of the program having a standard transfer rate. This PCR, which is distinct from the PCR of the program selected for storage, is equivalent to the PCRr defined in the above-described second embodiment. Accordingly, in the present example, the PCR extractor 5010 detects PCRr, as specified (Se) by the PCRr specifier 8000, for being outputted to the STC recoverer 500.

Thus, in the present embodiment, PCR information (standard program clock references PCRr) which is appended to another program which is being transferred at a standard transfer rate as specified by the PCRr specifier 8000 is extracted. Then, the STC recoverer 500 performs STC recovery by using the PCR (PCRr) value of the other program which is being sent at a normal transfer rate, rather than the PCR of the program to be recorded (i.e., the transfer rate ratio N not being 1).

As a result, STC can be normally recovered from a program having a non-standard transfer rate, and when reproducing the program from the data storage 200, program reproduction can be normally performed by using the PCR information appended in the stream of the program as it is.

Thus, according to the present invention, when receiving a program which has been transferred particularly slowly in order to be recorded in a recording device, STC can be normally recovered from the program having a slow transfer rate by subjecting the PCR values in the program to factor computation based on transfer rate cost information which is previously sent from the sending end, or by automatically calculating the transfer rate cost information at the receiver end. In addition, when reproducing the program from the recording device, program reproduction can be normally performed by using the PCR information appended in the stream of the program as it is.

INDUSTRIAL APPLICABILITY

Thus, the present invention makes it possible, in a storage-type data broadcast service system, to effectively utilize resources related to transfer paths when distributing a transport stream TS.

**Claims**

1. A storage-type data broadcast service system for transmitting a first transport stream constituting at least one content and containing a plurality of packet data having a program clock reference as reference clock information when reproducing the content, at a second transfer rate different from a first transfer rate which is determined by the reference clock information, and extracting the plurality of packet data composing the content from the transmitted transport stream to generate and store a second transport stream, comprising:

   a transmitter for transmitting the plurality of packet data composing the content at the second transfer rate, and
   a receiver for receiving the transmitted first transport stream and detecting a transfer rate ratio between the first transfer rate and the second transfer rate to generate the second transport stream based on the detected transfer rate ratio.

2. The storage-type data broadcast service system according to claim 1,
      wherein the receiver comprises:

   a PCR extractor for extracting the program clock reference contained in the first transport stream,
   an STC recoverer for recovering, based on the extracted program clock reference, a system time clock which is a processing reference clock for the packet data,
   a PCR correction factor calculator for detecting the transfer rate ratio based on two contiguous said extracted program clock references, and deriving, based on the transfer rate ratio, a correction factor for correcting the extracted program clock reference so as to match the second transfer rate, and
   a PCR corrector for correcting the extracted program clock reference based on the correction factor, wherein the STC recoverer is feedback-controlled to recover a system time clock based on the corrected program clock reference.

3. The storage-type data broadcast service system according to claim 1,
      wherein the receiver comprises:

   a PCR extractor for extracting the program clock reference contained in the first transport stream,

an STC recoverer for recovering, based on the extracted program clock reference, a system time clock which is a processing reference clock for the packet data,

an STC/PCR rate ratio calculator for deriving, based on the extracted program clock reference and the recovered system time clock, a correction factor for correcting the extracted program clock reference so as to match the second transfer rate, and

a PCR corrector for correcting the extracted program clock reference based on the correction factor, wherein the STC recoverer is feedback-controlled to recover a system time clock based on the corrected program clock reference.

4. The storage-type data broadcast service system according to claim 1,

wherein the receiver comprises:

a PCR extractor for extracting the program clock reference contained in the first transport stream,

a PCRr specifier for causing the PCR extractor to extract as a standard program clock reference the reference clock contained in the first transport stream and contained in packet data transferred at the first transfer rate, and

an STC recoverer for recovering, based on the extracted standard program clock reference, a system time clock which is a processing reference clock for the packet data.

5. The storage-type data broadcast service system according to claim 1,

wherein the transmitter comprises a transfer rate ratio appender for assigning the transfer rate ratio to the first transport stream TS, and

wherein the receiver comprises:

a PCR extractor for extracting the program clock reference contained in the first transport stream,

an STC recoverer for recovering, based on the extracted program clock reference, a system time clock which is a processing reference clock for the packet data,

a PCR correction factor generator for extracting the transfer rate ratio from the first transport stream, and deriving, based on the extracted transfer rate ratio, a correction factor for correcting the extracted program clock reference so as to match the second transfer rate, and

a PCR corrector for correcting the extracted program clock reference based on the correction factor, wherein the STC recoverer is feedback-controlled to recover a system time clock based on the corrected program clock reference.

EP 1 280 346 A1

FIG. 2

EP 1 280 346 A1

$T[PCRc(i+2)]$

$T[PCRc(i+1)]$

$T[PCRc(i)]$

$T[PCRc(i-1)]$

| $K \cdot Pa(i)$ | $K \cdot Pa(i+1)$ | $K \cdot Pa(i+2)$ | $K \cdot Pa(i+3)$ |

$TSP(n)$  $TSP(n+\alpha)$  $TSP(n+\alpha+\beta)$  $TSP(n+\alpha+\beta+\gamma)$

TS

PCR(i-1)  PCR(i)  PCR(i+1)  PCR(i+2)

$\Delta P(i)$  $\Delta P(i+1)$  $\Delta P(i+2)$

$Pc(i)=$ $C(K \cdot Pa(i)/F(Vdp(i-1)))$  $Pc(i+1)=$ $C(K \cdot Pa(i+1)/F(Vdp(i)))$  $Pc(i+2)=$ $C(K \cdot Pa(i+2)/F(Vdp(i+1)))$

$T[STC(i-1)]$

$T[STC(i)]$

$T[STC(i+1)]$

$T[STC(i+2)]$

FIG. 3

SDS

TS

SI
REMULTIPLEXER
10040

PMT'

DESCRIPTOR
INFORMATION
APPENDER
10030

PMT

SI
SEPARATOR
10020

TS'

TS
STORAGE
10000

N

TRANSFER
RATE RATIO
INPUTTER
10010

F I G. 5

EP 1 280 346 A1

EP 1 280 346 A1

EP 1 280 346 A1

F I G. 8

$$T[STC(i)] = T[STC(i-1)] + Pc(i)$$

$$Pc(i) = C(Pa(i)/F(Vdp(i-1)))$$

# F I G. 9

T[PCRc(i+2)]

T[PCRc(i+1)]

T[PCRc(i)]

T[PCRc(i-1)]

Pa(i)   Pa(i+1)   Pa(i+2)   Pa(i+3)

TSP(n)   TSP(n+$\alpha$)   TSP(n+$\alpha$+$\beta$)   TSP(n+$\alpha$+$\beta$+$\gamma$)

TS

PCR(i-1)   PCR(i)   PCR(i+1)   PCR(i+2)

$\Delta$P(i)   $\Delta$P(i+1)   $\Delta$P(i+2)

Pc(i)=
C(Pa(i)/F(Vdp(i-1)))

Pc(i+1)=
C(Pa(i+1)/F(Vdp(i)))

Pc(i+2)=
C(Pa(i+2)/F(Vdp(i+1)))

T[STC(i-1)]

T[STC(i)]

T[STC(i+1)]

T[STC(i+2)]

EP 1 280 346 A1

## INTERNATIONAL SEARCH REPORT

International application No.

PCT/JP01/03300

A. CLASSIFICATION OF SUBJECT MATTER
  Int.Cl$^7$  H04N5/765, 7/24
          H04L7/00, 12/56, 29/02
          H04J3/00

According to International Patent Classification (IPC) or to both national classification and IPC

B. FIELDS SEARCHED

Minimum documentation searched (classification system followed by classification symbols)
  Int.Cl$^7$  H04N5/76-5/781, 5/85, 5/91-5/956, 7/24-7/68
          H04L7/00, 12/56, 29/02
          H04J3/00

Documentation searched other than minimum documentation to the extent that such documents are included in the fields searched
    Jitsuyo Shinan Koho         1922-1996    Toroku Jitsuyo Shinan Koho   1994-2001
    Kokai Jitsuyo Shinan Koho   1971-2001    Jitsuyo Shinan Toroku Koho   1996-2001

Electronic data base consulted during the international search (name of data base and, where practicable, search terms used)
    JICST FILE ON SCIENCE AND TECHNOLOGY(JOIS)

C. DOCUMENTS CONSIDERED TO BE RELEVANT

| Category* | Citation of document, with indication, where appropriate, of the relevant passages | Relevant to claim No. |
|---|---|---|
| A | JP 9-247135 A (Mitsubishi Electric Corporation), 19 September, 1997 (19.09.97), Full text; Figs. 1 to 10 & US 5923220 A | 1-5 |
| P,A | JP 2000-312147 A (Fujitsu Limited), 07 November, 2000 (07.11.00), Full text; Figs. 1 to 8   (Family: none) | 1-5 |

☐ Further documents are listed in the continuation of Box C.   ☐ See patent family annex.

| | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 July, 2001 (16.07.01) | 24 July, 2001 (24.07.01) |

| Name and mailing address of the ISA/ | Authorized officer |
|---|---|
| Japanese Patent Office | |
| Facsimile No. | Telephone No. |

Form PCT/ISA/210 (second sheet) (July 1992)